# EUROPEAN PATENT SPECIFICATION

(11) **EP 2 103 002 B1**
(45) Date of publication and mention of the grant of the patent: **27.07.2016**
(21) Application number: 07867699.6
(22) Date of filing: 11.12.2007
(51) Int. Cl.: H04B 1/18, H04B 1/48

(54) **TIME DIVISION DUPLEX FORWARD-TO-REVERSE TRANSITION SIGNAL GENERATOR**
VORWÄRTS-RÜCKWÄRTS-ZEITDUPLEX-ÜBERGANGSSIGNALGENERATOR
GÉNÉRATEUR DE SIGNAL DE TRANSITION D'AVANT EN ARRIÈRE DUPLEX À RÉPARTITION DANS LE TEMPS

(30) Priority: 13.12.2006 US 874557 P
(43) Date of publication of application: 23.09.2009
(73) Proprietor: Intel Corporation, Santa Clara, CA 95054 (US)
(72) Inventor: HUNTON, Matthew J., Liberty Lake, WA 99019 (US); CARICHNER, Scott, Rancho Santa Margarita, CA 92688 (US)
(74) Representative: Goddar, Heinz J.
(86) International application number: PCT/US2007/025270
(87) International publication number: WO 2008/076248

(56) References cited:
- EP-A1- 1 648 099
- WO-A2-2006/081404
- US-A1- 2005 254 442
- US-A1- 2006 063 487
- US-B1- 6 215 982

## Description

### BACKGROUND OF THE INVENTION

### 1. Field of the Invention

The present invention relates generally to wireless communications systems and methods. More specifically, the invention relates to time division duplex wireless communications systems and methods.

### 2. Description of Related Art

Many modern wireless communication systems are moving to Time Division Duplex (TDD) to provide two-way communication between a base station and remote stations. In TDD systems, the same carrier frequency is used for both base-to-remote and remote-to-base radio links. These links are generally referred to as forward and reverse radio links, respectively. The two radio links share the same carrier frequency by alternately sharing the link in time. For a particular coverage area, the base station equipment will have one port supporting both forward and reverse links. This port will be connected to an antenna. The forward link will include sufficient power to reach remote stations. The reverse link must be capable of receiving low power signals from remote stations.

Base station manufacturers build equipment for various site deployment scenarios. Each site may differ in the amount of required forward power. The forward power required is determined by the size of the coverage area, and transport loss (generally coaxial cable) from the base station to the antenna. Since both the forward and reverse links share the same signal path, this transport loss also complicates the reverse link. Transport loss increases reverse link noise figures thus reducing the reverse link coverage area. Base station manufacturers attempt to balance these various site needs while at the same time keeping the number of base station variants to a minimum.

Given the base station variants available from manufacturers, some site requirements may still not be met in a cost effective way. This gives an opportunity for third party equipment suppliers to provide base station augmenting equipment. Such equipment is generally referred to as a booster. Boosters can include forward link power amplifiers, reverse link low noise amplifiers, or both. Boosters however are generally add-on devices with little or no coordinating communication with the base station equipment. This presents a problem when adding booster equipment to TDD base stations.

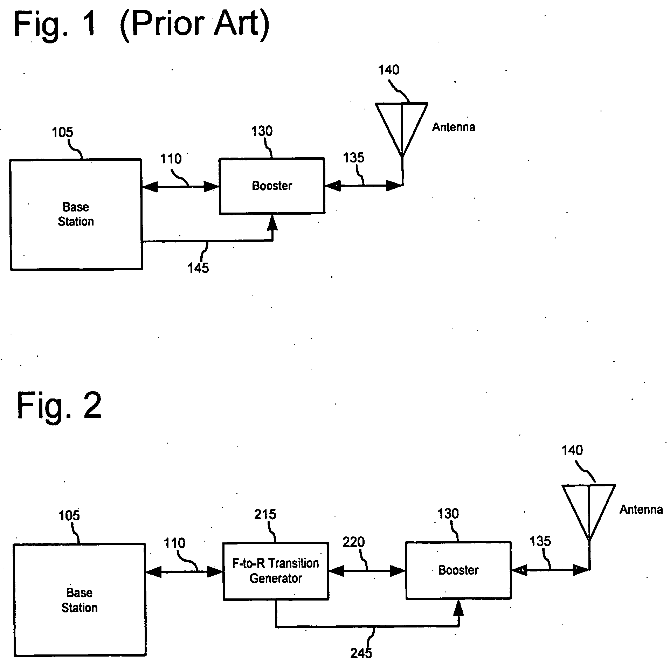

Generally a booster product is simply connected in the radio frequency (RF) signal path from the base station to the antenna. As previously stated, a booster can amplify the forward, the reverse, or both, links. To do this, however, the forward and reverse links must be isolated from the common signal path which shares both the forward and reverse link in time. Conventionally this must be done using separate data information from the base station regarding when the common signal path is used by the forward link or conversely the reverse link. Figure 1 shows a block diagram of such an approach in a system including a base station 105, a booster 130, and an antenna 140. The base station 105 operates with a TDD signal link connected on path 110. The base station 105 also has a logic signal output 145. This logic signal output 145 is at one logic state to indicate when the TDD signal path 110 is transmitting the forward signal, and another logic state when the TDD signal path 110 is receiving the reverse signal. The synchronous nature of these two signals permits the booster to switch from a forward signal boosting state to a reverse signal boosting state in order to produce optimal performance in both states. Without the logic signal 145 from the base station 105, the booster 130 would not provide optimal performance for either forward or reverse signals.

In general, however, this approach is not suitable since the separate data information from the base station regarding when the common signal path is used by the forward link, or conversely the reverse link, is not available. This information is often intentionally withheld by base station equipment providers to prevent augmenting base stations with third party equipment.

Accordingly a need presently exists for a system and method to optimize booster performance when separate data information from the base station regarding when the common signal path is used by the forward link, or conversely the reverse link, is not available.

Document US 2005/254442 discloses a repeater with detection and media access control.

Document US 2006/063487 discloses a repeater using cross-polarized signals.

Document WO 2006/081404 discloses a repeater with discrete time filter.

### SUMMARY OF THE INVENTION

In one aspect, embodiments of the invention provide a transition signal generator. The transition signal generator includes a signal sampler for sampling a time division duplex signal from a signal path in a communications system, a power detector for detecting a power of the sampled signal, and a timing control unit for generating a logic signal indicating a direction of the sampled signal from the detected power of the sampled signal.

In one embodiment, the signal sampler includes a directional coupler. The timing control unit generates the logic signal based on the rising or falling edge of the detected power of the sampled signal. The logic signal may be offset in time from the edge of the detected power of the sampled signal, for example, by one or more periods less a detection delay. Preferably, the logic signal is offset by one period less the detection delay. The timing control unit further generates the logic signal based on the width between rising and falling edges of the sampled signal. The width of the logic signal is preferably greater than the width of the sampled signal. The sampled signal from the signal path may a forward signal power substantially higher than a reverse signal power.

In another aspect, embodiments of the invention provide a wireless communication system. The system includes a base station, an antenna for outputting a forward signal from, or feeding a reverse signal to, the base station on a time division duplex basis, a booster coupled between the base station and the antenna for boosting at least one of the forward and the reverse signal, and a transition signal generator coupled to the base station and the booster to sample a time division duplex signal between the base station and the antenna and to control the booster, the transition signal generator including a signal sampler for sampling the time division duplex signal between the base station and the antenna, and means for generating a logic signal indicating a direction of the sampled signal to control the booster.

In one embodiment, the booster selectively boosts the forward signal or the reverse signal based on the logic signal generated by the transition signal generator. The time division duplex signal may include a forward signal, a reverse signal, and a reverse to forward gap between the forward signal and the reverse signal. The forward signal may have substantially higher power than the reverse signal.

In one embodiment, the signal sampler includes a directional coupler. The transition signal generator may further include a power detector for detecting a power of the sampled signal. The power detector is preferably a logarithmic power detector. The transition signal generator determines whether the signal is forward or reverse based on the detected power of the sampled signal.

In another aspect, embodiments of the invention provide a method for controlling a booster of a time division duplex signal between a base station and an antenna. The method includes sampling the time division duplex signal, determining a signal direction as being forward or reverse based on the sampled signal, and controlling the booster based on the determined signal direction.

The time division duplex signal may include a forward signal, a reverse signal, and a reverse to forward gap between the forward signal and the reverse signal. The forward signal has a substantially higher power than the reverse signal. In one embodiment, the method further includes detecting a power of the sampled signal and determining the signal direction is based on the detected power of the sampled signal. The method may further include outputting a logic signal indicating the signal direction, wherein the logic signal timing is based on the detected power of the sampled signal. The method may further include adjusting the logic signal timing to compensate for a delay of the sampled signal relative to the time division duplex signal.

In one embodiment, the logic signal is offset in time from the detected power of the sampled signal, for example, by one or more periods less a detection delay. Preferably, the logic signal is offset by one period less the detection delay. The logic signal is preferably based on the width and a rising edge period of the detected power of the sampled signal.

Further aspects of the construction and method of operation of the invention, with additional objects and advantages thereof, will be best understood from the following description of specific embodiments when read in connection with the accompanying drawings.

### BRIEF DESCRIPTION OF THE DRAWINGS

The characteristics and advantages of the present invention will be better understood from the following description in conjunction with the attached drawings.
Figure 1 is a block diagram of a prior art time division duplex base station utilizing a booster.
Figure 2 is a block diagram of a time division duplex base station utilizing a forward-to-reverse transition signal generator and a booster.
Figure 3 is a block diagram of the forward-to-reverse transition signal generator.
Figure 4A is a timing diagram for the forward signal and the reverse signal found on a common transmission path.
Figure 4B is a timing diagram for the forward power detection as measured by the forward-to-reverse transition signal generator.
Figure 4C is a timing diagram for the generated forward-to-reverse transition signal recovered by the present invention.
Figure 5 is block diagram of an exemplary booster.

### DETAILED DESCRIPTION OF THE INVENTION

The present invention addresses the above problem and provides a system and method which generates a forward-to-reverse link transition signal by monitoring the common line. This link transition signal can then be provided to a TDD booster thereby enabling booster operation. Accordingly the present invention also provides an improved base station and transmitter equipped with a booster.

Figure 2 is a block diagram including a base station 105, a forward-to-reverse transition signal generator 215, a booster 130, and an antenna 140. The base station 105 in Figure 2 does not include a logic signal output, or the logic signal output is not used. As before, the base station 105 operates with a TDD signal link connected on path 110. The base station TDD signal link is connected to a forward-to-reverse (F-to-R) transition signal generator 215. The TDD signal link passes through the signal generator 215 without modification, but perhaps with some attenuation, for connection to the booster 130 via signal path 220. The forward-to-reverse transition signal generator 215 also creates a logic signal output on path 245. This logic signal output 245 is at one logic state to indicate when the TDD signal path 220 is transmitting the forward signal, and another logic state when the TDD signal path 220 is receiving the reverse signal. The forward-to-reverse transition signal generator 215 then provides the TDD signal link on path 220 and the synchronous logic signal on path 245 to the booster 130. The booster 130 then operates as described above for the system of Figure 1.

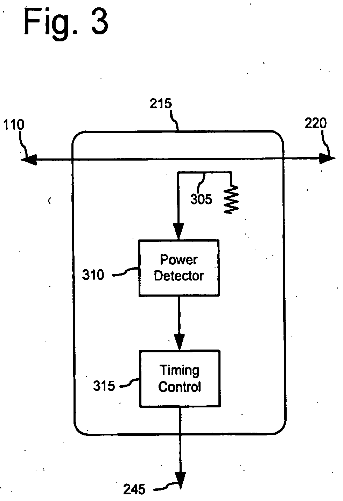

Figure 3 shows a block diagram of the forward-to-reverse transition signal generator 215. The signal generator 215 includes a signal sampler 305, such as a directional coupler or other well known samplers such as a Wilkinson splitter, a power detector 310, and a timing control unit 315. The directional coupler 305 samples signals entering from port 110 and exiting from port 220. The signal passing through the signal generator 215 in this direction is the forward signal. The forward signal is then power detected by the power detector 310. Any type of power detectors may be used in this application. However, a logarithmic power detector is generally preferred. By using a logarithmic power detector, the dynamic range of the signal generator 215 with respect to forward link signal power can be made larger. The power detector 310 also includes detected power filtering. Whenever possible, the filter bandwidth should be broad enough to pass the bandwidth of the signal transitions from forward-to-reverse, but narrow enough to filter off the power fluctuations of the forward signal due to modulation by information. The output of the power detector 310 is then fed to a timing control unit 315. The timing control unit 315 samples the output of the power detector 310. These samples are then digitally processed by the timing control unit 315 to determine an appropriate synchronous logic signal for use by the booster 130 on path 245.

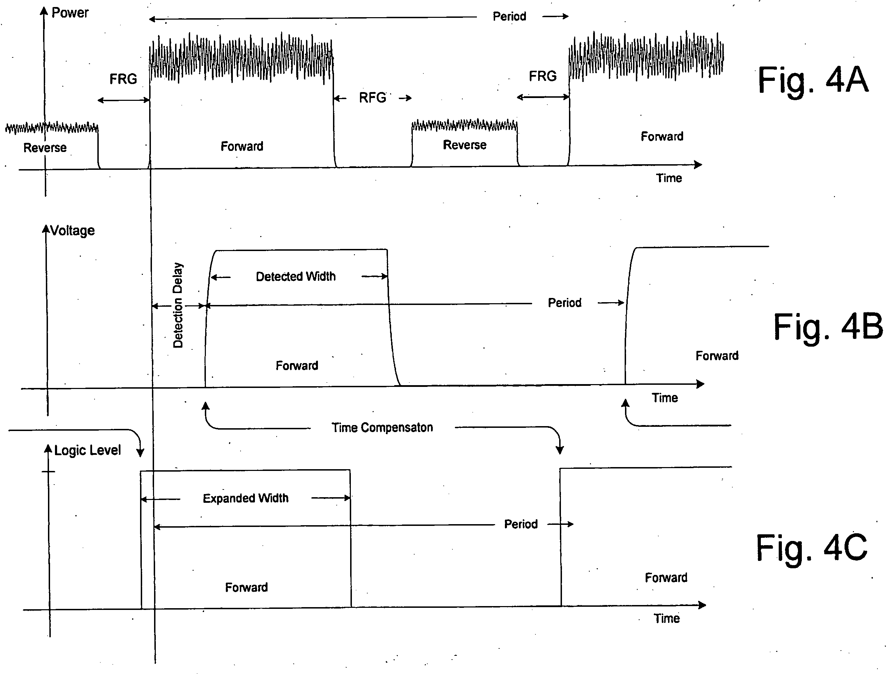

Figure 4A shows a timing diagram of the TDD signal found on signal paths 110, 220. Figure 4B shows the power detected by power detector 310 after coupling by the directional coupler 305. Figure 4C shows a logic signal generated by timing control unit 315 based on samples taken from the power detector 310 output. Figure 4A illustrates how the TDD signal is constructed from four parts. There is the forward signal, a forward-to-reverse signal gap (FRG), the reverse signal, and a reverse-to-forward gap (RFG). These four parts repeat on a periodic basis based on the rising edge of the forward signal. It should be noted that the reverse signal in Figure 4A is shown artificially high for illustrative purposes only.

Figure 4B shows the output of the power detector 310. The rising edge of the detected forward signal is delayed from the detected edge of the actual forward signal. This delay includes that of the directional coupler 305, power detecting circuits found within the power detector 310, and filtering circuits found within the power detector 310. Note that the filtering circuits within the power detector 310 have removed power fluctuation due to forward signal modulation by information. Figure 4B shows no residual fluctuations. However, some residual power fluctuation due to information modulation is expected and will not impair the operation of embodiments of the present invention. Note also that the power detector output does not show any output representing the reverse signal. In an actual system, some residual reverse signal detection may be present at the output of the power detector at low levels. These reverse detected levels will be low due to the fact that the forward signal is much higher in amplitude than the reverse signal on signal paths 110, 220, and because the directional coupler will further reduce the reverse signal since it is traveling in the isolated direction. Due to the significant differences in detected amplitude the reverse signal can be easily ignored by the timing control unit 315.

Figure 4C shows the output of the timing control unit 315. The timing control unit 315 samples the output power detector 310. From the samples taken, the timing control unit 315 can measure the forward signal detected width (Figure 4B) and the forward signal rising edge period. Based on this timing information, and design knowledge about the directional coupler 305 and the power detector 310, the forward-to-reverse transition signal shown in Figure 4C can be created with delays compensated for the signal generator 215. Note that the transition signal generated is offset in time from the detected signal. The offset shown is approximately one period less detection delay. In this example the rising edge on one forward period produces a transition signal generator rising edge for the following forward signal period. This delay could be increased by additional full periods if necessary. Also note that the timing generator forward signal pulse width is expanded. This is done to ensure that the booster 130 is optimized for forward signal transmission prior to the forward signal arriving at the booster 130 and throughout the forward signal transmission.

Those skilled in the art will appreciate that the exact timing of the rising and falling edges of the forward-to-reverse transition signal may depend on the specific booster 130 used. The timing control unit can be designed or programmed to provide for the specific booster needs. The expanded width feature show in Figure 4C should not be considered limiting. For example, one may want to have the falling edge of the logic level signal (Figure 4C) occur prior to the falling edge of the actual transmitted forward signal. This may be required by the booster design due to timing delays within the booster design itself. Also, forward link transmissions may vary in length even while the forward link rising edges remain periodic. In such cases the timing control unit may choose to change the logic state based on detection of the falling edge of a detected forward link transmission. In such a case, the delay from the rising edge of the actual signal to the associated rising edge of the logic signal should be much less than one period.

Those skilled in the art will appreciate that some time will be required to train the timing generator to properly create the logic level signal (Figure 4C). This training may be augmented by prior knowledge of the TDD signal characteristics and the characteristics of the booster product. If the characteristics of the signal transmission change with respect to period or forward link transmission time, this training will have to be repeated. During initial or repeated training, the logic level for the booster will have to be set to one fixed level. It is expected that the booster will be set for constant forward link transmission during training. This characteristic however could be set by the user during equipment deployment.

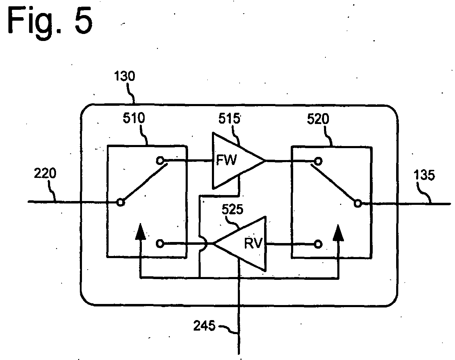

Figure 5 shows a block diagram of an exemplary booster 130. Internally the booster includes two paths, one for the forward signal (FW) and one for the reverse signal (RV). As shown the booster 130 includes a forward amplifier 515, which is configured to boost the forward signal. In many applications, this forward amplifier 515 may not be necessary since the base station 105 could provide an adequate signal level at the antenna 140 regardless of cable losses at signal paths 110, 220 from the base station 105. In these cases, the amplifier 515 would be replaced with a simple passive transmission line (e.g. cable). The booster 130 also includes a reverse amplifier 525. This amplifier sets the noise figure of the reverse signal path and overcomes cable losses from the antenna 140 and the base station 105. Since both the forward and reverse signals alternately use the booster in TDD, switches 510, 520 are placed on either side of the signal paths. These switches 510, 520 are controlled by the synchronous logic signal provided by forward-to-reverse transition signal generator 215 on signal path 245. The synchronous logic signal from signal path 245 may also be provided to the forward and reverse amplifiers 515, 525. These amplifiers would use the synchronous logic signal to shut down operation of part or all of the active circuits within the amplifier that is not in use by the booster. By doing so, booster power consumption would be reduced, and noise generated or amplified by these amplifiers would be eliminated when not in use. Those skilled in the art will appreciate that the forward and reverse signals can be separated into two independent paths using various methods including switches and circulators, and the present invention applies to those various methods.

Advantageously, the forward-to-reverse transition signal generator 215 in accordance with embodiments of the invention can be placed near or within the booster unit. This eliminates the need for connecting the timing logic signal path 145 directly to the booster 130. This is of particular advantage when the booster 130 is not located near the base station 105. Often times, boosters are placed at or near the antenna 140 to overcome reverse link cable loss.

The present invention has been described in relation to a presently preferred embodiment, however, it will be appreciated by those skilled in the art that a variety of modifications, too numerous to describe, may be made while remaining within the scope of the present invention. Accordingly, the above detailed description should be viewed as illustrative only and not limiting in nature.

## Claims

1. A transition signal generator (215) for use in optimizing performance of a booster (130) in time division duplex operation of a base station (105) by monitoring a common signal path, which shares both a forward and a reverse link in time, and generating a forward-to-reverse link transition signal, the transition signal generator (215) comprising:
a signal sampler (305) for sampling a time division duplex signal from the common signal path in a communications system; and
a power detector (310) for detecting a power of the sampled signal and generating an output indicative of the detected power of the sampled signal; **characterized by** a timing control unit (315) for sampling the output of the power detector (310), measuring a forward signal detected width and a forward signal rising edge period, and generating a logic signal for controlling the booster, the logic signal indicating a direction of the sampled signal from the measured forward signal detected width and the forward signal rising edge period.

2. The transition signal generator as set out in claim 1, wherein the signal sampler (305) comprises a directional coupler.

3. The transition signal generator as set out in claim 1, wherein the timing control unit (315) generates the logic signal based on the rising or falling edge of the detected power of the sampled signal.

4. The transition signal generator as set out in claim 3, wherein the logic signal is offset in time from the edge of the detected power of the sampled signal.

5. The transition signal generator as set out in claim 4, wherein the logic signal is offset by one or more periods less a detection delay.

6. The transition signal generator as set out in claim 5, wherein the logic signal is offset by one period less the detection delay.

7. The transition signal generator as set out in claim 3, wherein the timing control unit (315) further generates the logic signal based on the width between rising and falling edges of the sampled signal.

8. The transition signal generator as set out in claim 7, wherein the width of the logic signal is greater than the width of the sampled signal.

9. The transition signal generator as set out in claim 1, wherein the sampled signal from the signal path has a forward signal power substantially higher than a reverse signal power.

10. The transition signal generator (215) according to any of the preceding claims, the transition signal generator (215) being coupled to a wireless communication system; wherein the wireless communication system comprises:
a base station (105); and
an antenna (140) for outputting a forward signal from, or feeding a reverse signal to, the base station (105) on a time division duplex basis;
wherein the booster (130) is coupled between the base station (105) and the antenna (140) for boosting at least one of the forward and the reverse signal,
wherein the transition signal generator (215) is coupled to the base station (105) and the booster (130) to sample the time division duplex signal between the base station (105) and the antenna (140) and to control the booster (130).

11. The transition signal generator as set out in claim 10, wherein the booster (130) selectively boosts the forward signal or the reverse signal based on the logic signal generated by the transition signal generator.

12. The transition signal generator as set out in claim 10, wherein the time division duplex signal includes a forward signal, a reverse signal, and a reverse to forward gap between the forward signal and the reverse signal, and wherein the forward signal has substantially higher power than the reverse signal.

13. The transition signal generator as set out in claim 12, wherein the power detector is a logarithmic power detector.

14. The transition signal generator as set out in claim 12, wherein the transition signal generator (215) determines whether the signal is forward or reverse based on the detected power of the sampled signal.

15. A method for controlling a booster (130) of a time division duplex signal between a base station (105) and an antenna (140); the method comprising:
sampling the time division duplex signal;
determining a signal direction as being forward or reverse based on the sampled signal;
controlling the booster (130) based on the determined signal direction,
detecting a power of the sampled signal,
generating an output indicative of the detected power of the sampled signal,
**characterized by**
sampling the output indicative of the detected power of the sampled signal,
measuring a forward signal detected width and a forward signal rising edge period, and
generating a logic signal for controlling the booster, the logic signal indicating a direction of the sampled signal from the measured forward signal detected width and the forward signal rising edge period.

16. The method as set out in claim 15, wherein the time division duplex signal includes a forward signal, a reverse signal, and a reverse to forward gap between the forward signal and the reverse signal, and wherein the forward signal has a substantially higher power than the reverse signal.

17. The method as set out in claim 15, further comprising adjusting the logic signal timing to compensate for a delay of the sampled signal relative to the time division duplex signal.

18. The method as set out in claim 15, wherein the logic signal is offset in time from the detected power of the sampled signal.

19. The method as set out in claim 15, wherein the logic signal is offset by one or more periods less a detection delay.

20. The method as set out in claim 15, wherein the logic signal is offset by one period less the detection delay.

21. The method as set out in claim 15, wherein the logic signal is based on the width and a rising edge period of the detected power of the sampled signal.

## Patentansprüche

1. Übergangssignalgenerator (215) zur Verwendung bei der Optimierung der Leistung eines Verstärkers (130) im Zeitduplexbetrieb einer Basisstation (105) durch Überwachen eines gemeinsamen Signalweges, der sowohl einen Vorwärts- als auch einen Rückwärts-Link in der Zeit gemeinsam nutzt, und bei der Generierung eines Vorwärts-Rückwärts-Link-Übergangssignals, wobei der Übergangssignalgenerator (215) Folgendes umfasst:
einen Signalabtaster (305) zum Abtasten eines Zeitduplexsignals aus dem gemeinsamen Signalweg in einem Kommunikationssystem; und
einen Leistungsdetektor (310) zum Detektieren einer Leistung des abgetasteten Signals und zum Generieren eines Ausgangssignals, das die detektierte Leistung des abgetasteten Signals angibt; **gekennzeichnet durch**
eine Zeitsteuerungseinheit (315) zum Abtasten des Ausgangssignals des Leistungsdetektors (310), zum Messen einer detektierten Breite eines Vorwärtssignals und einer ansteigenden Flankenperiode eines Vorwärtssignals, und zum Generieren eines Logiksignals zum Steuern des Verstärkers, wobei das Logiksignal eine Richtung des abgetasteten Signals aus der gemessenen detektierten Breite des Vorwärtssignals und der ansteigenden Flankenperiode des Vorwärtssignals angibt.

2. Übergangssignalgenerator nach Anspruch 1, wobei der Signalabtaster (305) einen Richtungskoppler umfasst.

3. Übergangssignalgenerator nach Anspruch 1, wobei die Zeitsteuerungseinheit (315) das Logiksignal auf der Basis der ansteigenden oder fallenden Flanke der detektierten Leistung des abgetasteten Signals generiert.

4. Übergangssignalgenerator nach Anspruch 3, wobei das Logiksignal in der Zeit von der Flanke der detektierten Leistung des abgetasteten Signals versetzt ist.

5. Übergangssignalgenerator nach Anspruch 4, wobei das Logiksignal um eine oder mehrere Perioden - abzüglich einer Detektionsverzögerung - versetzt ist.

6. Übergangssignalgenerator nach Anspruch 5, wobei das Logiksignal um eine Periode - abzüglich der Detektionsverzögerung - versetzt ist.

7. Übergangssignalgenerator nach Anspruch 3, wobei die Zeitsteuerungseinheit (315) des Weiteren das Logiksignal auf der Basis der Breite zwischen ansteigenden und fallenden Flanken des abgetasteten Signals generiert.

8. Übergangssignalgenerator nach Anspruch 7, wobei die Breite des Logiksignals größer ist als die Breite des abgetasteten Signals.

9. Übergangssignalgenerator nach Anspruch 1, wobei das abgetastete Signal aus dem Signalweg eine Vorwärtssignalleistung hat, die wesentlich höher ist als eine Rückwärtssignalleistung.

10. Übergangssignalgenerator (215) nach einem der vorangehenden Ansprüche, wobei der Übergangssignalgenerator (215) mit einem Drahtloskommunikationssystem gekoppelt ist; wobei das Drahtloskommunikationssystem Folgendes umfasst:
eine Basisstation (105); und
eine Antenne (140) zum Ausgeben eines Vorwärtssignals aus der, oder zum Einspeisen eines Rückwärtssignals in die, Basisstation (105) auf einer Zeitduplexbasis;
wobei der Verstärker (130) zwischen der Basisstation (105) und der Antenne (140) gekoppelt ist, um das Vorwärtssignal und/oder das Rückwärtssignal zu verstärken,
wobei der Übergangssignalgenerator (215) mit der Basisstation (105) und dem Verstärker (130) gekoppelt ist, um das Zeitduplexsignal zwischen der Basisstation (105) und der Antenne (140) abzutasten und den Verstärker (130) zu steuern.

11. Übergangssignalgenerator nach Anspruch 10, wobei der Verstärker (130) gezielt das Vorwärtssignal oder das Rückwärtssignal auf der Basis des durch den Übergangssignalgenerator generierten Logiksignals verstärkt.

12. Übergangssignalgenerator nach Anspruch 10, wobei das Zeitduplexsignal ein Vorwärtssignal, ein Rückwärtssignal und einen Rückwärts-Vorwärts-Bandabstand zwischen dem Vorwärtssignal und dem Rückwärtssignal enthält, und wobei das Vorwärtssignal eine wesentlich höhere Leistung als das Rückwärtssignal hat.

13. Übergangssignalgenerator nach Anspruch 12, wobei der Leistungsdetektor ein logarithmischer Leistungsdetektor ist.

14. Übergangssignalgenerator nach Anspruch 12, wobei der Übergangssignalgenerator (215) auf der Basis der detektierten Leistung des abgetasteten Signals bestimmt, ob das Signal Vorwärts oder Rückwärts ist.

15. Verfahren zum Steuern eines Verstärkers (130) eines Zeitduplexsignals zwischen einer Basisstation (105) und einer Antenne (140), wobei das Verfahren Folgendes umfasst:
Abtasten des Zeitduplexsignals;
Bestimmen einer Signalrichtung als Vorwärts oder Rückwärts auf der Basis des abgetasteten Signals;
Steuern des Verstärkers (130) auf der Basis der bestimmten Signalrichtung,
Detektieren einer Leistung des abgetasteten Signals,
Generieren eines Ausgangssignals, das die detektierte Leistung des abgetasteten Signals angibt,
**gekennzeichnet durch**
Abtasten des Ausgangssignals, das die detektierte Leistung des abgetasteten Signals angibt,
Messen einer detektierten Breite eines Vorwärtssignals und einer ansteigenden Flankenperiode eines Vorwärtssignals, und
Generieren eines Logiksignals zum Steuern des Verstärkers, wobei das Logiksignal eine Richtung des abgetasteten Signals aus der gemessenen detektierten Breite des Vorwärtssignals und der ansteigenden Flankenperiode des Vorwärtssignals angibt.

16. Verfahren nach Anspruch 15, wobei das Zeitduplexsignal ein Vorwärtssignal, ein Rückwärtssignal und einen Rückwärts-Vorwärts-Bandabstand zwischen dem Vorwärtssignal und dem Rückwärtssignal enthält, und wobei das Vorwärtssignal eine wesentlich höhere Leistung als das Rückwärtssignal hat.

17. Verfahren nach Anspruch 15, das des Weiteren umfasst, das Logiksignal-Timing zu justieren, um eine Verzögerung des abgetasteten Signals relativ zu dem Zeitduplexsignal zu kompensieren.

18. Verfahren nach Anspruch 15, wobei das Logiksignal in der Zeit von der detektierten Leistung des abgetasteten Signals versetzt ist.

19. Verfahren nach Anspruch 15, wobei das Logiksignal um eine oder mehrere Perioden - abzüglich einer Detektionsverzögerung - versetzt ist.

20. Verfahren nach Anspruch 15, wobei das Logiksignal um eine Periode - abzüglich der Detektionsverzögerung - versetzt ist.

21. Verfahren nach Anspruch 15, wobei das Logiksignal auf der Breite und einer ansteigenden Flankenperiode der detektierten Leistung des abgetasteten Signals basiert.

## Revendications

1. Générateur de signal de transition (215) destiné à être utilisé dans l'optimisation des performances d'un suramplificateur (130) dans une opération de duplexage par répartition dans le temps d'une station de base (105) en surveillant un trajet de signal commun, qui partage une liaison aller ainsi qu'une liaison retour dans le temps, et en générant un signal de transition de liaison aller-retour, le générateur de signal de transition (215) comprenant :
un échantillonneur de signal (305) permettant d'échantillonner un signal de duplexage par répartition dans le temps à partir du trajet de signal commun dans un système de communication ; et
un détecteur de puissance (310) permettant de détecter une puissance du signal échantillonné et de générer une sortie reflétant la puissance détectée du signal échantillonné ;
**caractérisé par** :
une unité de contrôle de temporisation (315) permettant d'échantillonner la sortie du détecteur de puissance (310), de mesurer une largeur détectée de signal aller et une période de front montant de signal aller, et de générer un signal logique permettant de contrôler le suramplificateur, le signal logique indiquant une direction du signal échantillonné à partir de la largeur détectée de signal aller et de la période de front montant de signal aller mesurées.

2. Générateur de signal de transition selon la revendication 1, dans lequel l'échantillonneur de signal (305) comprend un coupleur directif.

3. Générateur de signal de transition selon la revendication 1, dans lequel l'unité de contrôle de temporisation (315) génère le signal logique sur la base du front montant ou descendant de la puissance détectée du signal échantillonné.

4. Générateur de signal de transition selon la revendication 3, dans lequel le signal logique est décalé dans le temps à partir du front de la puissance détectée du signal échantillonné.

5. Générateur de signal de transition selon la revendication 4, dans lequel le signal logique est décalé d'une ou plusieurs périodes moins un délai de détection.

6. Générateur de signal de transition selon la revendication 5, dans lequel le signal logique est décalé d'une période moins le délai de détection.

7. Générateur de signal de transition selon la revendication 3, dans lequel l'unité de contrôle de temporisation (315) génère en outre le signal logique sur la base de la largeur entre les fronts montant et descendant du signal échantillonné.

8. Générateur de signal de transition selon la revendication 7, dans lequel la largeur du signal logique est supérieure à la largeur du signal échantillonné.

9. Générateur de signal de transition selon la revendication 1, dans lequel le signal échantillonné à partir du trajet de signal a une puissance de signal aller sensiblement supérieure à une puissance de signal retour.

10. Générateur de signal de transition (215) selon l'une quelconque des revendications précédentes, le générateur de signal de transition (215) étant couplé à un système de communication sans fil ; le système de communication sans fil comprenant :
une station de base (105) ; et
une antenne (140) servant à émettre un signal aller provenant de la station de base (105) ou un signal retour vers ladite station de base (105) par duplexage par répartition dans le temps ;
le suramplificateur (130) étant couplé entre la station de base (105) et l'antenne (140) pour suramplifier le signal aller et/ou le signal retour,
le générateur de signal de transition (215) étant couplé à la station de base (105) et au suramplificateur (130) pour échantillonner le signal de duplexage par répartition dans le temps entre la station de base (105) et l'antenne (140) et pour contrôler le suramplificateur (130).

11. Générateur de signal de transition selon la revendication 10, dans lequel le suramplificateur (130) suramplifie de manière sélective le signal aller ou le signal retour sur la base du signal logique généré par le générateur de signal de transition.

12. Générateur de signal de transition selon la revendication 10, dans lequel le signal de duplexage par répartition dans le temps comprend un signal aller, un signal retour et un intervalle aller-retour entre le signal aller et le signal retour, et dans lequel le signal aller a une puissance sensiblement supérieure à celle du signal retour.

13. Générateur de signal de transition selon la revendication 12, dans lequel le détecteur de puissance est un détecteur de puissance logarithmique.

14. Générateur de signal de transition selon la revendication 12, le générateur de signal de transition (215) déterminant si le signal est un signal aller ou retour sur la base de la puissance détectée du signal échantillonné.

15. Procédé de contrôle d'un suramplificateur (130) d'un signal de duplexage par répartition dans le temps entre une station de base (105) et une antenne (140) ; le procédé consistant à :
échantillonner le signal de duplexage par répartition dans le temps ;
déterminer si une direction de signal est aller ou retour sur la base du signal échantillonné ;
contrôler le suramplificateur (130) sur la base de la direction de signal déterminée ;
détecter une puissance du signal échantillonné ;
générer une sortie reflétant la puissance détectée du signal échantillonné ;
**caractérisé par** l'étape consistant à :
échantillonner la sortie reflétant la puissance détectée du signal échantillonné ;
mesurer une largeur détectée de signal aller et une période de front montant de signal aller ; et
générer un signal logique permettant de contrôler le suramplificateur, le signal logique indiquant une direction du signal échantillonné à partir de la largeur détectée de signal aller et de la période de front montant de signal aller mesurées.

16. Procédé selon la revendication 15, dans lequel le signal de duplexage par répartition dans le temps comprend un signal aller, un signal retour et un intervalle aller-retour entre le signal aller et le signal retour, et dans lequel le signal aller a une puissance sensiblement supérieure à celle du signal retour.

17. Procédé selon la revendication 15, consistant en outre à régler la temporisation de signal logique pour compenser un délai du signal échantillonné par rapport au signal de duplexage par répartition dans le temps.

18. Procédé selon la revendication 15, dans lequel le signal logique est décalé dans le temps à partir de la puissance détectée du signal échantillonné.

19. Procédé selon la revendication 15, dans lequel le signal logique est décalé d'une ou plusieurs périodes moins un délai de détection.

20. Procédé selon la revendication 15, dans lequel le signal logique est décalé d'une période moins le délai de détection.

21. Procédé selon la revendication 15, dans lequel le signal logique est basé sur la largeur et une période de front montant de la puissance détectée du signal échantillonné.
